# EUROPEAN PATENT SPECIFICATION

(11) **EP 0 503 697 B1**
(45) Date of publication and mention of the grant of the patent: **21.06.1995**
(21) Application number: 92200494.0
(22) Date of filing: 20.02.1992
(51) Int. Cl.: F01D 5/30, B23K 11/087

(54) **Method for joining individual turbine blades within a multiple-property turbine rotor**
Verfahren zur Verbindung von Turbinenschaufeln im Mehreigenschaftenturbinenrotor
Méthode pour la jonction des aubes de turbine dans un rotor de turbine multipropiété

(30) Priority: 11.03.1991 US 666978
(43) Date of publication of application: 16.09.1992
(73) Proprietor: GENERAL MOTORS CORPORATION, Detroit Michigan 48202 (US)
(72) Inventor: Ewing, Bruce Allan, Martinsville, IN 46151 (US); Jacox, John Oliver, Indianapolis, IN 46220 (US); Hammond, Stephen Norman, Brownsburg, IN 46112 (US)
(74) Representative: Atkinson, Peter Birch

(56) References cited:
- US-A- 4 405 851

## Description

This invention generally relates to gas turbine engine manufacturing techniques. In particular, this invention relates to a method for facilitating the making of multiple-property turbine rotors wherein individual turbine blades are metallurgically joined to a turbine rotor by a method as specified in the preamble of claim 1.

Gas turbine engines are frequently used in modern day aircraft. In these turbine propulsion systems, air is drawn in at the upstream end of the engine and the pressure, density and temperature of the air are raised by a compressor. Just downstream from the compressor, fuel is injected into the air and burned, adding energy to the gaseous fluid. The gaseous mixture then expands and passes through a gas turbine (which drives the compressor) on its way to the exit nozzle. There it emerges into the atmosphere at an extremely high velocity and at a pressure equal to or greater than the atmospheric pressure surrounding the nozzle. Propulsion of the aircraft is thereby achieved.

These turbine engines are characterized by demanding performance specifications over an incredibly wide variation in temperature. It is not unusual for the engine specifications to require performance at temperatures ranging from subzero up to about 1093°C (2000°F). Therefore it is necessary that the manufacturing techniques used to form these turbine engines judiciously combine a variety of materials so as to optimize the various physical properties which are most suitable for a specific application. In particular, a turbine rotor has a rotor ring with internal hub and outwardly-extending turbine blades, each of the components having different performance requirements. Hence, multiple-property turbine rotors are produced which employ a first type of alloy tailored to maximize the turbine blade requirements, and another type of alloy tailored to optimize the properties of the internal hub.

Generally, these multiple-property turbine rotors are formed by either diffusion-bonding or diffusion-brazing a cast rotor ring to a solid hub of the desired material. The cast rotor ring has a plurality of turbine blades integrally cast into its design. An alternative approach has been to utilize thermal-spraying techniques to deposit an appropriate superalloy powder within the inner perimeter of the above-described cast rotor ring.

However, these known methods for making the multiple-property turbine rotors generally work well only when the turbine blades are integrally cast into the rotor ring design. Unfortunately, this is not usually the case. Typically for the high-performance applications which these multiple-property turbine rotors are designed, the turbine blades must be individually formed from a single-crystal cast material and then inserted into individual recesses or cavities within the turbine rotor ring. These single-crystal cast turbine blades are characterized by high strength at the demanding temperature extremes, and have a relatively complex shape with a thin leading edge and rounder, wider trailing edge, and at least one internal cavity for cooling purposes.

As stated previously, there are shortcomings associated with the conventional methods of making a multiple-property rotor ring from a rotor ring which has a plurality of individually-inserted single-crystal turbine blades. Invariably, gaps of various widths develop between each turbine blade and its corresponding recess within the rotor ring. These gaps, unless filled or masked prior to bonding of the hub to the rotor ring, permit undesirable flow of the material which is used to bond the hub and rotor ring together. In particular, the bonding material can flow into the cooling cavities within the turbine blade via the unfilled gaps. The internal cooling cavities within the turbine blade must remain open so as to provide satisfactory cooling performance at the elevated temperatures. Therefore it is imperative that these gaps be filled prior to the bonding of the hub and rotor ring. However, there has been no satisfactory method proposed to consistently fill or mask the gaps so as to achieve this desired and necessary result.

In addition, there are also associated shortcomings when using the thermal-spray approach for forming the hub within the rotor ring. With this method, a vaporized metallic spray is used to build up and totally fill the inside aperture of a rotor ring with a nearly fully-dense deposit of metal. After hot isostatic pressing of the rotor ring assembly, the residual non-connecting porosity in the deposited metal is healed and a high-quality metallurgical bond is established between the rotor ring and the hub. However, this method cannot be routinely employed with a rotor ring having individually-inserted high-performance, single-crystal cast turbine blades which have an internal cooling cavity. This is again because of the gaps which are invariably formed between the individual turbine blade and its corresponding cavity in the rotor ring. These gaps must be masked to prevent over-spray of the sprayed superalloy powder into the cored cooling cavities within the turbine blades. Also, it is desirable that these gaps be masked so as to provide a suitably smooth and continuous surface on the inner periphery of the rotor ring for satisfactory build-up of the hub by the thermally-sprayed metal powder. However, it is extremely difficult to achieve a consistent masking technique in practice.

Therefore, what is needed is a method for filling the gaps between an individual turbine blade and its corresponding recess in the rotor ring before the process of joining the rotor ring to an internal hub, which avoids the shortcomings associated with the current joining methods used. In particular, it would be desirable for such a method to provide a permanently-bonded, metallurgically-compatible material within the gap. In addition, it would be desirable for such a method to permit easy deposition of variable amounts of filler metal so as to uniformly fill each gap, regardless of the size and nature of the gap.

A method for assembling individual turbine blades within a rotor ring according to the present invention is characterised by the features specified in the characterising portion of claim 1.

It is, therefore, the principle object of this invention to provide a method for filling the gaps between an individual turbine blade and its corresponding retaining cavity within a turbine rotor ring, specifically prior to the metallurgical joining or forming of an internal hub to the rotor ring.

It is a further object of this invention that such a method provides a permanently-bonded, metallurgically-compatible material within these gaps between each turbine blade and retaining cavity.

It is still a further object of this invention that such a method utilizes electrodeposition techniques, particularly electrospark deposition techniques, so as to permit complete and uniform filling of a variety of sized gaps.

In accordance with a preferred embodiment of this invention, these and other objects and advantages are accomplished as follows.

The applicants are the first to provide a method for uniformly and consistently filling the gaps between an individual turbine blade and its corresponding retaining cavity within a turbine rotor ring, prior to the metallurgical joining or forming of an internal hub to the rotor ring, which is easily employed with a variety of different-sized gaps.

The method utilizes electrospark deposition techniques and is suitable for use when making multiple-property turbine rotors having an internal hub of one material and high-performance turbine blades of another material.

The turbine blades, which are formed from an appropriate nickel-based alloy, are inserted into corresponding retaining cavities therefor within the rotor ring so as to form a turbine rotor assembly. Due to the cast nature of these components, the fit between each blade and its retaining cavity is somewhat loose, therefore a gap of varying size will exist between the turbine blade and the respective retaining cavity. The turbine rotor assembly is operably connected to the negative lead of a rectified alternating current (AC) electrical power source.

An electrode is provided which is formed from an appropriate material chosen to be metallurgically compatible with the nickel-based alloy. The electrode is electrically connected in parallel to a capacitor charging circuit and positively connected to the AC source of electrical power.

An inventive feature of this invention is that the gaps between each turbine blade and retaining cavity of the rotor ring are metallurgically bridged with the electrode material. This is accomplished by discharging the capacitor charging circuit through the electrode, when contact is made between the electrode and the turbine rotor assembly. When discharged, the electrode material is transferred from the electrode to the base metal of the turbine rotor assembly adjacent to the gap, making the gap progressively smaller. This discharging step is repeated as necessary within the gap so as to metallurgically bridge the gap with a compatible material and thereby rigidly bond each of the turbine blades within the corresponding retaining cavity of the rotor ring. A hub of appropriate material is then provided and conventionally metallurgically joined to the turbine rotor assembly at its inner periphery.

The discharged electrode material is deposited onto, and concurrently metallurgically alloyed into, the desired region of the turbine rotor assembly adjacent to the gap, by transfer of the material from the electrode using a short-duration electrical impulse. Although the spark that is generated by the discharge of the capacitor is of a short duration, it has sufficient energy to melt a portion of the electrode causing it to be accelerated through the arc formed between the negatively-charged turbine rotor assembly and the positively-charged electrode, and to thereby be deposited onto the base metal. Upon contact with the base metal, the deposited metal alloys with the substrate forming a fully-dense metallurgical bond. The time and energy involved are small enough that total heat input to the base metal is minimal such that distortion and metallurgical structure changes of the base metal are negligible. This is a particularly advantageous feature of this invention, since the crystallographic structure of the turbine blades and the rotor ring must not be significantly impaired by the joining process in order to ensure satisfactory performance of the turbine rotor over a wide temperature range.

With this method, there is great flexibility associated with the type of filler metal which can be deposited within the gap between each turbine blade and its corresponding retaining cavity within the rotor ring. A desirable feature of this method is that the gap is filled by utilizing a metallurgically-compatible filler metal which is specifically applied to desired regions, thereby eliminating the need for any masking techniques. In addition, upon contact between the deposited filler alloy and the base metal, a permanent metallurgical bond is formed between the metals, with virtually no heat-affected zone being formed or any distortion to the base metal. Lastly, the electrode made from the filler alloy can be manipulated manually or mechanically, allowing for complete control over the deposition of the filler metal within the gaps between each turbine blade and its retaining cavity, thereby making it suitable for use with various sized gaps.

Other objects and advantages of this invention will be better appreciated from the detailed description thereof, which follows.

The above and other advantages of this invention will become more apparent from the following description taken in conjunction with the accompanying drawings in which:
Figure 1 is an elevated view showing an illustrative example of a rotor ring having a plurality of retaining cavities;
Figure 2 is an elevated view of an illustrative example of an internally-cooled type of turbine blade which would be retained by the rotor ring of Figure 1;
Figure 3 is a view of a turbine rotor assembly having a rotor ring and a multitude of outwardly-extending, internally-cooled turbine blades retained within the ring;
Figure 4 is a detailed, cross-sectional view through a part of the turbine rotor assembly of Figure 3, showing the internally-cooled turbine blades being retained within the rotor ring and the gaps between these components which are filled in accordance with the preferred method of this invention;
Figure 5 is a cross-sectional view taken along line 5-5 of Figure 4; and
Figure 6 is a schematic view showing an electrode formed from a filler alloy, a base metal, and an electrical connection therebetween in accordance with a preferred method of this invention.

The applicants are the first to facilitate the making of multiple property turbine rotors having an internal hub of one material and high-performance single-crystal turbine blades of another material, by metallurgically bridging the gaps between each turbine blade and its corresponding retaining cavity within a rotor ring, prior to the metallurgical joining of the hub to the inner periphery of the rotor ring. The method of this invention utilizes electrospark deposition techniques to bridge the unwanted gaps.

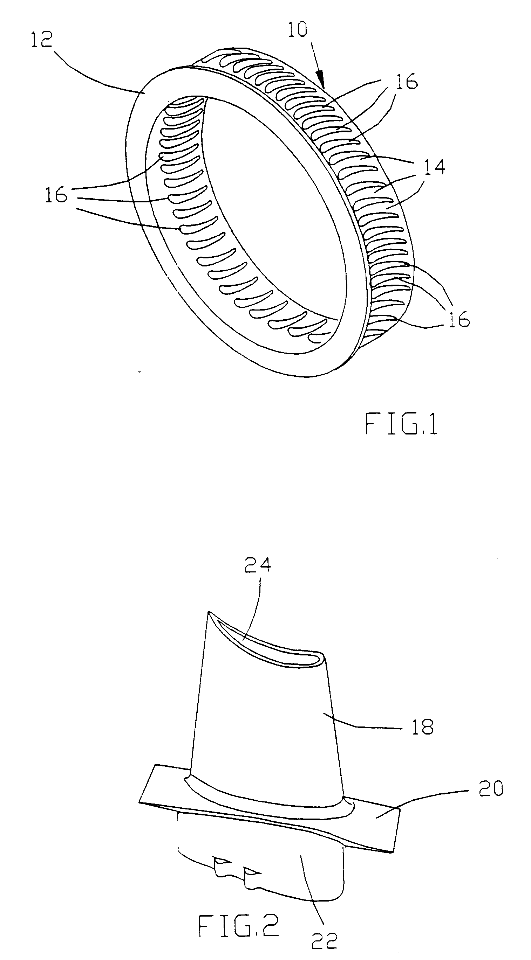

An illustrative example of a rotor ring 10 for use with this method is shown in Figure 1. The rotor ring 10 is cast or machined from an appropriate material so as to have a multitude of evenly-spaced retaining cavities 16 around its circumference. Between each retaining cavity 16 is the retaining portion 14 of the rotor ring 10 which retains each subsequently-inserted turbine blade in place. Generally, as shown, the rotor ring 10 will have a flat-faced rim 12 for abutment during assembly of the rotor ring 10 within a turbine engine. The rotor ring 10 is formed from a high-strength material which is suitable for use at elevated temperatures, preferably a nickel-based alloy but some iron and titanium-based alloys may also be suitable.

An illustrative example of a turbine blade 18 which would be used with this invention is shown in Figure 2. The turbine blade 18 is also formed from a high-strength material which is suitable for use at elevated temperatures, preferably a single-crystal nickel-based alloy. Although the rotor ring 10 and turbine blade 18 will experience different physical stresses during use, and therefore different materials may be used for the two components, it is preferable that they be formed from the same or similar material so as to minimize the stresses associated with joining different materials together.

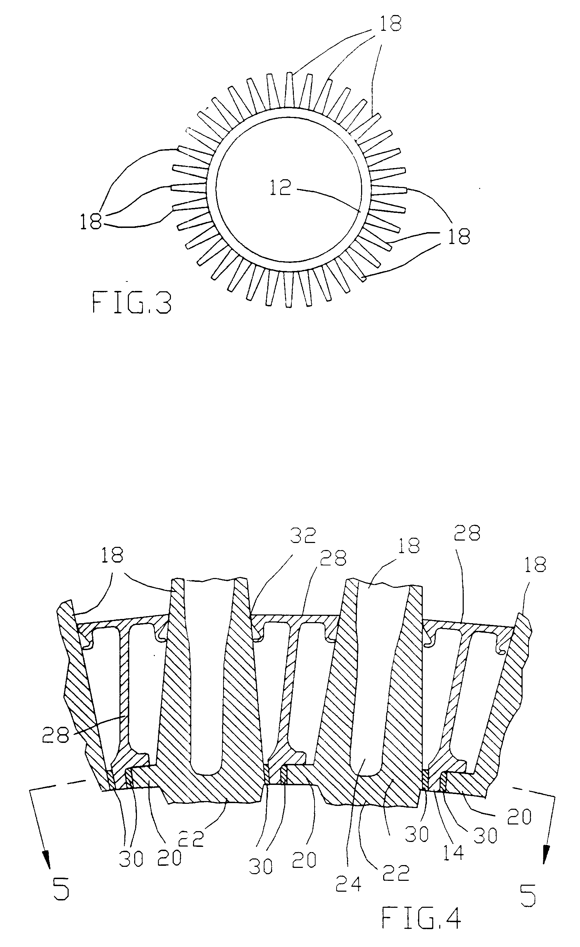

As shown, the turbine blade 18 will generally have a blade portion (where the lead line for 18 is shown) with a sharp leading edge and a rounded, wider trailing edge, a base 20, root portion 22, and at least one internal cooling cavity 24. The root portion 22 is inserted into a corresponding retaining cavity 16 of the rotor ring 10. The base 20 serves to locate and secure the blade 18 in position on the ring 10. Figure 3 is a side view of a turbine rotor assembly showing the rim 12 of the rotor ring 10 and a multitude of the retained turbine blades 18.

Because the individual single-crystal turbine blades 18 are generally cast and the rotor ring 10 is either cast or machined, there is generally not a tight fit between each blade 18 and its retaining cavity 16. Therefore a gap will exist between each turbine blade 18 and its retaining cavity 16. This gap will vary depending upon the dimensional differences between the turbine blade 18 and retaining cavity 16.

As more clearly shown in Figure 4, the turbine blades 18 are retained by individual retainers 28 within the rotor ring. As discussed previously, the root and base portions, 22 and 20 respectively, of the turbine blades 18 are inserted into the corresponding retainers 28 of the rotor ring by sliding the root and base 22 and 20 into the retaining portion 14 of the rotor ring. The base 20 of each blade 18 locates and secures the blade 18 in position on the ring 10. The cooling cavity 24 of each turbine blade 18 is also shown. The turbine blades 18 are held within the individual retainers 28 by a friction fit (shown as 32) at a top portion of each retainer 28. However, at the bottom retaining portion 14, a gap (shown as filled area 30) exists between the turbine blade 18 and retainer 28, due to the dimensional changes which occur during the casting and/or machining of these parts.

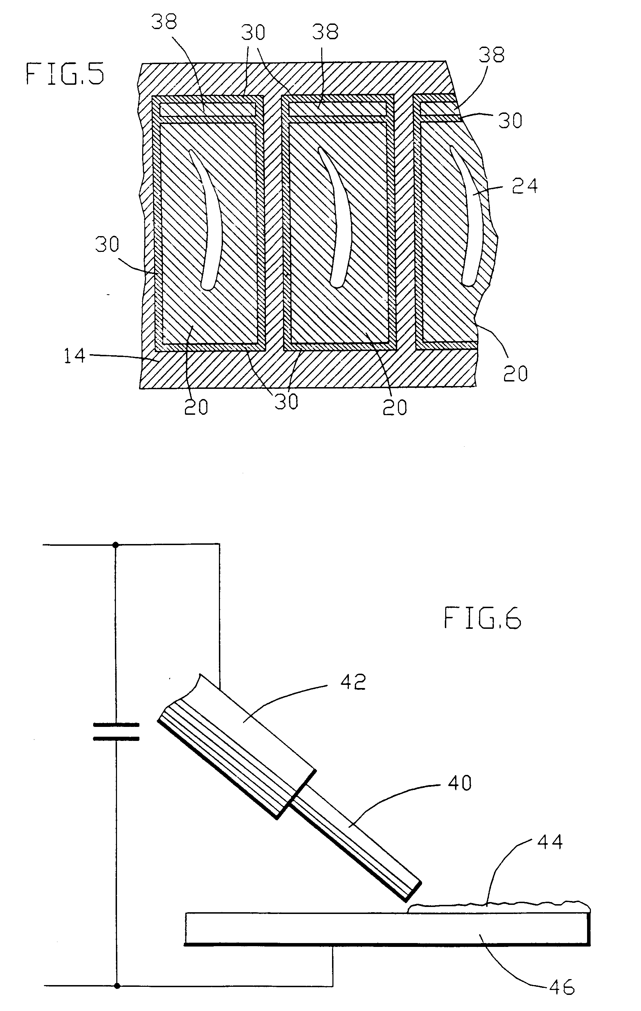

The gap region 30 is filled using the method of this invention and is more clearly shown in Figure 5, which is a cross-sectional view taken along line 5-5 of Figure 4 through the base regions 20 of the turbine blades 18 and the retaining portion 14 of the rotor ring. A portion of the cooling cavity 24 of each turbine blade is also evident along this cross-sectional view. The retaining portion 14 of the rotor ring generally surrounds the base 20 of the turbine blade, with the gap 30 (shown as being filled) everywhere therebetween. In those regions where the gap between the base 20 and retaining portion 14 is relatively large, a plug 38 formed from a metallurgically-compatible material, preferably the same material as the turbine blade, is inserted into the relatively large gap region and then fusion-welded into place using the method of this invention.

The gap region 30 is filled with a metallurgically-compatible material using the following steps. As shown in Figure 6, an electrode 40 is provided which is formed from an appropriate material chosen to be metallurgically-compatible with the nickel-based alloy used to form the turbine blades and which is also compatible with the material used to form the rotor ring. Thus it is desirable that both the single-crystal turbine blades and the rotor ring be formed from the same or a very similar material, so as to minimize the stresses associated with joining dissimilar materials together.

The electrode 40 formed from the desired filler alloy is retained within a holder 42, and is electrically connected to the base metal 46 of the assembled rotor ring having the multitude of turbine blades inserted therein, or also referred to as the turbine rotor assembly. As stated previously, it is most preferable that the electrode be formed from the same nickel-based superalloy used to form the turbine blades, so as to maximize performance at extreme elevated temperatures and to minimize the stresses due to joining these components together. The electrode 40 is charged positively and the turbine rotor assembly 46 is charged negatively for deposition of material thereon.

The electrode 40 is preferably electrically connected in parallel to a capacitor charging circuit and positively connected to an AC source of electrical power (not shown). Although other means for achieving the desired electrical circuitry may also be used. The electrode 40 is disposed in proximity to the region where material deposition is to occur, specifically the gap 30 between the base 20 of the turbine blade and the retaining portion 14 of the turbine rotor as shown in Figure 5.

The filler alloy (depicted as layer 44 in Figure 6, or the material in the filled gap 30 in Figures 4 and 5) is deposited onto, and alloyed into, the adjacent surfaces of the retaining portion and turbine blade, 14 and 20 respectively, next to the gap 30, by transfer of the braze alloy from the electrode 40 (of Figure 6) using a short-duration electrical impulse. (The size of the gap region 30 is shown exaggerated to better describe the advantages of this invention.) A capacitor is conventionally charged using a rectified alternating current power source and then discharged through the electrode 40 by the firing of an independently-triggered thyristor (not shown). As stated previously, alternate means for accomplishing the discharge of the capacitor are known in the art and may be used instead.

The discharged electrode material is deposited onto, and concurrently metallurgically alloyed into, the desired weld region of the turbine rotor assembly adjacent to the gap 30, by transfer of the material from the electrode 40 using a short-duration electrical impulse. Although the spark that is generated by the discharge of the capacitor is of a short duration, it has sufficient energy to melt a portion of the electrode 40 causing it to be accelerated through the arc formed between the negatively-charged turbine rotor assembly (corresponding to the base metal retaining portion 14 of the rotor ring and the base 20 of the turbine blade 18) and the positively-charged electrode 40. The entire turbine rotor assembly is preferably negatively charged to ensure adequate sparking and uniform deposition of the material. Alternatively, only one of the components of the turbine rotor assembly, either the rotor ring or turbine blade, is negatively charged and material is deposited only on that component and that side 14 or 20 of the gap 30. With this alternative approach, the gap 30 would be bridged from one side to the other, instead of simultaneously being bridged from both sides in the preferred approach. However as stated previously, deposition of the filler alloy electrode 40 occurs as the electrode 40 contacts either component of the turbine rotor assembly (14 or 20), and the capacitive circuit is concurrently discharged. Since the gap 30 is greatly magnified for purposes of discussing this invention, in actuality, the distance between the two components 14 and 20 would be extremely small. Therefore, the electrode 40 would most probably contact both components 14 and 20 and would simultaneously bridge the gap 30 from both sides, represented by 14 and 20, regardless of what combination of components are negatively charged. It is to be noted that with conventional methods of construction of turbine wheel rotors, this gap could not be satisfactorily filled, thereby indirectly resulting in a plugged air-cooling cavity in one or more blades during subsequent joining or forming of the internal hub. This would result in diminished aerodynamic performance of the turbine blade assembly.

The electric spark discharge caused by the discharge of the capacitor through the electrode 40 when contacted by the turbine rotor assembly thereby causes the melted portion of the electrode material to be deposited onto the base metal within the gap 30. Upon contact with the base metal, the deposited metal alloys with the substrate, forming a fully-dense metallurgical bond. The time and energy involved are small enough that total heat input to the base metal is minimal. Therefore, distortion and metallurgical structure changes of the base metal are negligible. This is a particularly advantageous feature of this invention, since the crystallographic structure of the single-crystal turbine blades and the rotor ring must not be significantly impaired by the joining process in order to ensure satisfactory performance of the turbine rotor over a wide temperature range.

Frequency rates varying between about 200 Hz to about 1200 Hz for the alternating current are used to generate the sparking, and corresponding melting, of the filler alloy electrode 40. It has been determined that this range of frequencies provides sufficient energy into the electrode 40 so as to melt the material, but also allows sufficient control over the material deposition rate.

As shown in Figure 6, the electrode 40 is provided within an appropriate holder 42 which is manually or mechanically moved along the gap region 30, whilst the simultaneous and continual discharging of the capacitor occurs. With this method, the electrode filler alloy (depicted as 44 in Figure 6) is only deposited at the desired regions where contact is made between the electrode 40 and base metal of the retaining portion 14 and the base 20 of the blades in the turbine rotor assembly. Therefore, this method facilitates the filling of any shaped gap 30 and is limited only by the accessibility of the electrode 40 to the gap region 30, thereby permitting great flexibility during assembly of these turbine rotor components. It has been determined that deposition of the electrode material 40 occurs more smoothly if the electrode 40 is simultaneously oscillated or rotated whilst contacting the base metal 14 and 20. This movement of the electrode prevents sticking of the electrode 40 to the base metal when the melted portion of the electrode 40 is deposited.

With this method, the filler alloy 44 is metallurgically bonded to the base metal within the weld region of the gap 30. The surface of the filled gap 30 is typically not smooth, as shown, due to the nature of this deposition process wherein the electrode 40 is moved along the length of the gap region. Individual fillets are formed each time the electrical circuit is discharged through the electrode 40 and the small amount of electrode material is melted. If a smooth filled gap 30 is required, the filled material 30 can be appropriately machined or polished after deposition.

The turbine blades 18 may be formed from any suitable high-temperature material. Examples of suitable materials are not only the nickel-based superalloys, but also stainless steels, iron alloys, manganese alloy materials, and titanium alloys. The rotor ring 10 is preferably also formed from any of these suitable high-temperature materials.

Effective results have been obtained with the use of various superalloys which are suitable for high-temperature use, although it is expected that satisfactory results would be achieved with any of the above-listed materials. The commonly known material designation names and elemental compositions (in nominal weight percentages) for the materials tested using the method of the invention are as follows:
AF56: 11.7%Cr, 8.7%Co, 2.0%Mo, 4.5%W, 4.3%Ti, 4.5%Ta, 3.3%Al and balance Ni, which is a commercially-available, single-crystal cast nickel-based material;
CMSX-3: 7.8%Cr, 4.6%Co, 0.5%Mo, 8.0%W, 1%Ti, 6%Ta, 5.6%Al, 0.1%Hf, and balance Ni, which is a commercially-available, single-crystal cast nickel-based material;
MarM247: 0.16%C, 8.2%Cr, 10%Co, 0.6%Mo, 10%W, 1%Ti, 5.5%Al, 0.02%B, 0.09%Zr, 3%Ta and balance Ni, which is a commercially-available, equi-axed cast nickel-based material;
PA101: 0.15%C, 12.6%Cr, 9%Co, 2.0%Mo, 4%W, 4%Ti, 4%Ta, 3.5%Al, 0.015%B, 0.1%Zr, 1%Hf and balance Ni, which is an experimental nickel-based powder alloy which can formed into the desired components;
MarM509: 0.6%C, 23.5%Cr, 55%Co, 7%W, 0.2%Ti, 3.5%Ta, 0.5%Zr, and 10%Ni, which is a commercially-available, equi-axed cast cobalt-based material; and
HA188: 0.1%C, 22%Cr, 39%Co, 1.25%Mn, 14%W, 0.4%Si, 3%Fe(max.) and 22%Ni, which is a commercially-available, wrought cobalt-based material.

The nickel-based alloys are generally characterized by exceptionally high strength at the elevated temperatures and are therefore particularly suited for use in the turbine blades. The cobalt-based alloys are characterized by better oxidation resistance, and are therefore more suitable for stationary structures.

The gap filler alloy may be any electrically-conductive material that can be formed into an electrode and that is metallurgically compatible with the nickel or cobalt-based metal to be bridged. The electrode alloy must be able to conduct and discharge the electrical charge of the capacitive charging circuit, which is used to melt the electrode so as to deposit the electrode alloy appropriately within the gap between the base of the turbine blade and the retaining portion of the rotor ring. Preferably the electrode alloy is the same material as the nickel-based alloy used to form the turbine rotor assembly components. This preferred combination maximizes the performance of the material (and accordingly the turbine rotor itself) at the elevated temperatures. However, other metallurgically-compatible materials could be used such as weld filler alloys formed from other nickel-based alloys, as well as nickel or an iron-based material. However it is most preferred to use the same material for the gap filler alloy to ensure a high-quality weld in the gap and to minimize the stresses associated with joining dissimilar materials together.

The electrode filler alloy was successfully deposited onto matching components formed from each of the above-identified superalloys, so as to fill a gap of predetermined size between the components using the electrospark deposition method of this invention. In each case, the electrode filler alloy was identical to the base metal used. However it is foreseeable that different combinations of materials could be used with satisfactory results expected since all of the above-listed materials are essentially metallurgically-compatible with one another. The several pairs of components were joined by bridging the gaps, with good metallurgical weld joints being obtained. It is believed that gaps as large as up to about 1.65 mm (0.065") wide can be filled with this method, or alternatively a metal plug of the same material can be inserted into the gap and then the metal plug is welded to the turbine rotor assembly components using this method. Gaps of up to about 0.635 mm (0.025") can be routinely filled using this method without the need for a metal plug.

The filled gaps formed with the electrode filler alloy in accordance with this invention exhibited dense metallurgical bonds with no heat-affected zones in the base metal. The filled gaps can be appropriately heat-treated to obtain the desired crystallographic microstructure.

The preferred electrospark process parameters employed for the above-identified materials are as follows. First the individual turbine blades should be inserted within the retaining cavity of the rotor ring. If necessary, the turbine blades can be conventionally tack-welded at several points to ensure satisfactory retention of the blades within their corresponding rotor ring cavities during assembly and processing. The fit between the blades and cavities will be relatively loose, therefore requiring that the gaps between these components be filled using the method of this invention.

Next the surfaces to be joined by this method are cleaned thoroughly, such as by grinding or machining to remove gross debris followed by grit-blasting to remove any other foreign matter. The surfaces then should be wiped with acetone or any other traditional cleaning solvent.

The electrodes used to metallurgically fill the gap between each turbine blade and its retaining cavity were formed from the above-listed materials, depending on the base metal of the turbine rotor assembly. The electrodes were 2.18 mm (0.086") in diameter and 508 mm (2.0") long for the oscillating type of electrode holder, and 3.18 mm (0.125") in diameter and 50.8 mm (2.0") long for a rotating type of electrode holder. It is preferred for the best control of the welding process that the tip of the electrode should not extend more than 31.75 mm (1.25") from a chuck of the electrode holder 42.

The gaps between each single-crystal turbine blade and its corresponding retaining cavity were then filled using this technique. Argon gas was flowed over the region to be filled by the fusion-welding of the electrode material to the adjacent base metal surfaces, at a rate sufficient to shield this region from unwanted oxidation through exposure to the atmosphere. In practice, the argon was flowed at about 283.168 dm³/hour (10 cubic feet per hour), and the region to be metallurgically joined was purged with the argon for about 30 seconds prior to contacting with the electrode to ensure good welding results. Any other commercially-available inert gas could also be used to shield the region during the braze alloy deposition process.

The electrode motion was then begun, either oscillating or rotating, depending on the type of holder used, and the capacitor was charged. The workpiece was touched with the electrode with a pressure equivalent to the pressure that would be used for colouring with a wax crayon. The electrode was then moved along the desired weld region to be filled, whilst applying an even layer of deposited electrode filler alloy produced from the electrode arcing. Preferably, overlapping passes are made with the electrode until the entire surface is uniformly covered with the filler alloy. The electrode angle should be at about a 45 degree angle with the workpiece during the deposition process.

The capacitance value employed was about 20 microfarads and the frequency was about 200 Hz. A short-circuit voltage of about 100 volts and a short-circuit current of about 1 Ampere was used. These parameters may be varied within reasonable limitations, however these values resulted in high-quality metallurgical welds. The particulars of the electrospark deposition method used are similar to the method disclosed in U.S. Patent No.4,405,851 to Sheldon entitled "Apparatus for Transfer of Metallic Materials by Electric Discharge".

In addition, it is foreseeable that the entire inner periphery of the turbine rotor assembly could be deposited with a metallurgically-compatible material using this method, instead of just the unfilled gap regions between each turbine blade and the rotor ring, around the inner periphery thereof. This may be preferred if it is more feasible or practical in a high-production volume setting, and so as to ensure complete filling of any gaps or voids along the inner periphery of the rotor ring 10.

After the gaps between each turbine blade and its retaining cavity are satisfactorily filled, an internal hub is metallurgically formed or joined within the inner periphery of the turbine rotor assembly. A first method would be to provide a solid hub of appropriate material, probably again a nickel-based metal alloy, and then diffusion-bonding or diffusion-brazing the hub to the inner periphery of the turbine rotor assembly, using conventional techniques. Since this invention seals the inner periphery of the turbine rotor assembly by selectively depositing a metallurgically-compatible material around those unfilled regions of the inner periphery of the rotor ring, the braze alloy which is used to join the hub to the turbine rotor assembly is prevented from flowing into any undesirable areas, such as the cooling cavities of the turbine blades. If the entire inner periphery of the turbine rotor assembly is sealed with a metallurgically-compatible material which is deposited using this method, then the deposited layer may also be beneficial during diffusion-bonding since it would act as a compliant layer to adjust for any expansion mismatches between the various materials during the diffusion-bonding process.

An alternative method could be used to metallurgically form the hub within the inner periphery of the turbine rotor assembly. That method would include building a hub from a suitable alloy powder within the inner periphery of the rotor ring. The alloy powder would be deposited onto the inner periphery of the rotor ring using conventional thermal spray methods. The alloy powder would be prevented from entering any of the turbine blade cooling cavities due to the presence of the filled gaps or the inner peripheral seal, which were formed using the method of this invention. Metallurgical bonding between the hub and inner periphery of the turbine rotor assembly, as well as full hub density, would be achieved by hot isostatic pressing of the thermally-sprayed assembly.

Other known methods could also be used to metallurgically join or form a hub within the inner periphery of the turbine rotor assembly.

With this method, there is great flexibility associated with the type of filler metal which can be deposited within the gap between each turbine blade and its corresponding retaining cavity within the rotor ring, or alternatively which can be deposited around the entire inner periphery of the turbine rotor assembly so as to ensure complete filling of any gap regions. An advantageous feature of this method is that the gap is filled by utilizing a metallurgically-compatible filler metal which is specifically applied to desired regions, thereby eliminating the need for any masking techniques during the subsequently joining or forming of an internal hub. In addition, upon contact between the deposited filler alloy and the base metal, a permanent metallurgical bond is formed between the metals, with virtually no heat-affected zone being formed or distortion to the base metal. Therefore, the crystallographic microstructure of the turbine blades is retained. Lastly, the electrode made from the filler alloy can be manipulated manually or mechanically, allowing for complete control over the deposition of the filler metal within the gaps between each turbine blade and its retaining cavity, thereby making it suitable for use with various sized gaps.

While the present invention has been described in terms of preferred embodiments thereof, it is apparent that other forms of this method could be adopted by one skilled in the art, such as by substituting other base metals or weld-filler alloys, or by modifying the electrical circuitry or hook-up. Accordingly, the scope of the invention is to be limited only by the scope of the following claims.

## Claims

1. A method of making a turbine rotor assembly including a number of turbine blades (18) of a suitable metal alloy and a rotor ring (10), the method comprising the step of inserting each turbine blade in a corresponding retaining cavity (16) formed within the rotor ring (10); characterised by the steps of providing an electrode (40) formed from an appropriate material which is metallurgically compatible with said metal alloy of the turbine blades (18) operably connecting positive and negative discharge leads to a capacitor charging circuit, said positive lead being directly connected to said electrode (40) and said negative lead being operably connected to said turbine rotor assembly; metallurgically sealing said turbine blades (18) within said retaining cavities (16) of said rotor ring (10) by discharging a capacitor within said capacitor charging circuit through said electrode (40) upon contact being made between said electrode (40) and said turbine rotor assembly, so that material of said electrode (40) is transferred from said electrode (40) to a weld region (30) which exists between each of said turbine blades (18) and said corresponding retaining cavity (16); and repeating said discharging step as necessary within said weld region (30) so as to metallurgically seal each of said turbine blades (18) within the corresponding retaining cavity (16) of said rotor ring (10).

2. A method according to claim 1, in which said metal alloy is a nickel-based alloy suitable for use at high temperatures.

3. A method according to claim 1 or 2, in which means are provided for oscillating or rotating said electrode (40) whilst said electrode (40) contacts said turbine rotor assembly.

4. A method according to any one of claims 1 to 3, in which the method further comprises the step of purging said weld region (30) with an inert gas whilst contacting said weld region (30) with said electrode (40) and concurrently discharging said capacitor within said capacitor charging circuit.

5. A method according to any one of the preceding claims, in which said electrode (40) is formed from the metal alloy used in said turbine blades (18).

6. A method according to any one of claims 1 to 5, in which the turbine blades (18) are formed from a nickel-based alloy, the method comprising the additional step of metallurgically joining a metallurgically-compatible superalloy hub to the assembly of turbine blades and rotor ring at an inner periphery of said rotor ring (10).

7. A method according to claim 6, in which said step of metallurgically joining said hub to said turbine rotor assembly comprises diffusion-brazing said hub to said inner periphery of said rotor ring (10).

8. A method according to claim 6, in which said step of metallurgically joining said hub to said turbine rotor assembly comprises diffusion-bonding said hub to said inner periphery of said rotor ring (10).

9. A method according to claim 6, in which said step of metallurgically joining said hub to said turbine rotor assembly comprises forming said hub by thermal-spray depositing successive concentric layers of metal on said inner periphery of said rotor ring (10).

## Patentansprüche

1. Verfahren zum Herstellen einer Turbinenläuferbaugruppe, welche folgendes umfasst: eine Anzahl von Turbinenlaufschaufeln (18) aus einer geeigneten Metallegierung und einen Läuferring (10), wobei das Verfahren den Schritt des Einsetzens jeder Turbinenlaufschaufel in eine entsprechende, im Läuferring (10) eingeformte Aufnahmevertiefung (16) hat, gekennzeichnet durch die Schritte des Vorsehens einer aus einem geeigneten Material, das metallurgisch mit der genannten Metallegierung der Turbinenlaufschaufeln (18) verträglich ist, geformten Elektrode (40), die Leitungen für positive bzw. negative Entladung betriebsfähig an einen Kondensatoraufladungskreis anschließt, wobei die genannte positive Leitung direkt an die genannte Elektrode (40) angeschlossen ist und die genannte negative Leitung betriebsfähig an die genannte Turbinenläuferbaugruppe angeschlossen ist; des metallurgischen Einschweißens der genannten Turbinenlaufschaufeln (18) in die genannten Aufnahmevertiefungen (16) des genannten Läuferrings (10) durch Entladung eines Kondensators innerhalb des genannten Kondensatoraufladungskreises durch die genannte Elektrode (40) bei Kontakt zwischen der genannten Elektrode (40) und der genannten Turbinenläuferbaugruppe, so daß Material der genannten Elektrode (40) von der genannten Elektrode (40) auf einen Schweißbereich (30), der zwischen jeder der genannten Turbinenlaufschaufeln (18) und der genannten entsprechenden Aufnahmevertiefung (16) besteht, übertragen wird; und des Wiederholens des genannten Entladungsschrittes nach Bedarf innerhalb des genannten Schweißbereichs (30), um jede der genannten Turbinenlaufschaufeln (18) in der entsprechenden Aufnahmevertiefung (16) des genannten Läuferrings (10) metallurgisch einzuschweißen.

2. Verfahren nach Anspruch 1, bei dem die genannte Metallegierung eine zur Verwendung bei hohen Temperaturen geeignete Legierung auf Nickelbasis ist.

3. Verfahren nach Anspruch 1 oder 2, bei dem Mittel zum Schwingen oder Drehen der genannten Elektrode (40), während die genannte Elektrode (40) die genannte Turbinenläuferbaugruppe berührt, vorgesehen sind.

4. Verfahren nach einem der Ansprüche 1 bis 3, bei dem das Verfahren ferner den Schritt des Ausblasens des genannten Schweißbereichs (30) mit einem Inertgas, während der genannte Schweißbereich (30) mit der genannten Elektrode (40) berührt wird, und des gleichzeitigen Entladens des genannten Kondensators innerhalb des genannten Kondensatoraufladungskreises umfaßt.

5. Verfahren nach einem der vorangehenden Ansprüche, bei dem die genannte Elektrode (40) aus der in den genannten Turbinenlaufschaufeln (18) verwendeten Metallegierung geformt ist.

6. Verfahren nach einem der Ansprüche 1 bis 5, bei dem die Turbinenlaufschaufeln (18) aus einer Legierung auf Nickelbasis geformt sind, wobei das Verfahren den zusätzlichen Schritt des metallurgischen Verbindens einer metallurgisch verträglichen Superlegierungsnabe mit der Baugruppe von Turbinenlaufschaufeln und Läuferring an einem inneren Umfang des genannten Läuferrings (10) umfaßt.

7. Verfahren nach Anspruch 6, bei dem der genannte Schritt des metallurgischen Verbindens der genannten Nabe mit der genannten Turbinenläuferbaugruppe das Diffusionslöten der genannten Nabe an den genannten inneren Umfang des genannten Läuferrings (10) umfaßt.

8. Verfahren nach Anspruch 6, bei dem der genannte Schritt des metallurgischen Verbindens der genannten Nabe mit der genannten Turbinenläuferbaugruppe das Diffussionsbinden der genannten Nabe an den genannten inneren Umfang des genannten Läuferrings (10) umfaßt.

9. Verfahren nach Anspruch 6, bei dem der genannte Schritt des metallurgischen Verbindens der genannten Nabe mit der genannten Turbinenläuferbaugruppe das Formen der genannten Nabe durch thermisches Aufspritzen aufeinanderfolgender konzentrischer Metallschichten auf den genannten inneren Umfang des genannten Läuferrings (10) umfaßt.

## Revendications

1. Procédé de fabrication d'un ensemble à rotor de turbine comportant un certain nombre d'ailettes (18) de turbine en un alliage métallique adapté et un anneau (10) de rotor, le procédé comprenant l'étape consistant en l'insertion de chaque ailette de turbine dans une cavité (16) de retenue correspondante formée à l'intérieur de l'anneau (10) de rotor ; caractérisé par les étapes consistant à prévoir une électrode (40) formée à partir d'une matière appropriée qui est compatible au niveau métallurgique avec ledit alliage métallique des ailettes (18) de turbine raccordant de manière actionnable des fils de décharge négative et positive à un circuit de charge à condensateur, ledit fil positif étant connecté directement à ladite électrode (40) et ledit fil négatif étant connecté de manière actionnable audit ensemble à rotor de turbine ;
en la fermeture hermétique de manière métallurgique des ailettes (18) de turbine à l'intérieur des cavités (16) de retenue dudit anneau (10) de rotor en déchargeant on condensateur à l'intérieur dudit circuit de charge à condensateur à travers ladite électrode (40) lors de la mise en contact entre ladite électrode (40) et ledit ensemble à rotor de turbine, de sorte que de la matière de ladite électrode (40) est transférée depuis ladite électrode (40) jusqu'à une région de soudure (30) qui se trouve entre chacune desdites ailettes (18) de turbine et ladite cavité (16) de retenue correspondante ; et en la répétition de ladite étape de décharge selon les besoins à l'intérieur de la région de soudure (30) de manière à fermer hermétiquement de manière métallurgique chacune des ailettes (18) de turbine à l'intérieur de la cavité (16) de retenue correspondante dudit anneau (10) de rotor.

2. Procédé selon la revendication 1, dans lequel ledit alliage métallique est un alliage à base de nickel adapté pour l'emploi à des températures élevées.

3. Procédé selon la revendication 1 ou la revendication 2, dans lequel des moyens sont prévus servant à faire osciller ou tourner ladite électrode (40) tandis que ladite électrode (40) est mise en contact avec ledit ensemble à rotor de turbine.

4. Procédé selon l'une quelconque des revendications 1 à 3, dans lequel le procédé comprend en outre l'étape consistant en la purge de ladite région de soudure (30) à l'aide d'un gaz inerte tout en mettant en contact ladite région de soudure (30) avec ladite électrode (40) et en déchargeant simultanément ledit condensateur à l'intérieur dudit circuit de charge à condensateur.

5. Procédé selon l'une quelconque des revendications précédentes, dans lequel ladite électrode (40) est formée à partir d'un alliage métallique employé dans lesdites ailettes (18) de turbine.

6. Procédé selon l'une quelconque des revendications 1 à 5, dans lequel les ailettes (18) de turbine sont formées à partir d'un alliage à base de nickel, le procédé comprenant l'étape supplémentaire de joindre de manière métallurgique un moyeu en superalliage compatible de manière métallurgique à l'ensemble d'ailettes de la turbine et d'anneau de rotor au niveau d'une périphérie interne dudit anneau (10) de rotor.

7. Procédé selon la revendication 6, dans lequel ladite étape consistant en la jointure de manière métallurgique dudit moyeu audit ensemble à rotor de turbine comprend le brasage par diffusion dudit moyeu à ladite périphérie interne dudit anneau (10) de rotor.

8. Procédé selon la revendication 6, dans lequel ladite étape consistant en la jointure de manière métallurgique dudit moyeu audit ensemble à rotor de turbine comprend le bonding par diffusion dudit moyeu à ladite périphérie interne dudit anneau (10) de rotor.

9. Procédé selon la revendication 6, dans lequel ladite étape consistant en la jointure de manière métallurgique dudit moyeu audit ensemble à rotor de turbine comprend la formation dudit moyeu par le dépôt par vaporisation thermique de couches concentriques successives de métal sur ladite périphérie interne dudit anneau (10) de rotor.
